# FASCICULE DE BREVET EUROPEEN

(11) **EP 0 596 779 B1**
(45) Date de publication et mention de la délivrance du brevet: **27.08.1997**
(21) Numéro de dépôt: 93402649.3
(22) Date de dépôt: 28.10.1993
(51) Int. Cl.: C04B 41/00, C04B 41/87, B64G 1/58, B64C 1/38

(54) **Procédé et système de protection contre l'oxydation d'un matériau oxydable**
Verfahren zum Schützen gegen Oxydation und Schutzsystem für ein oxidierbares Material
Method and system for protecting an oxidizable material against oxidation

(30) Priorité: 02.11.1992 FR 9213094
(43) Date de publication de la demande: 11.05.1994
(73) Titulaire: AEROSPATIALE Société Nationale Industrielle, 75781 Paris Cédex 16 (FR)
(72) Inventeur: Piketty-Leydier, Laurence, F-78290 Croissy-sur-Seine (FR); Dorvaux, Jean-Marc, F-92500 Rueil-Malmaison (FR); Rousseau, Gérard, F-33160 Saint Aubin de Medoc (FR)
(74) Mandataire: Dubois-Chabert, Guy

(56) Documents cités:
- EP-A- 0 359 614
- EP-A- 0 428 083
- US-A- 3 026 806
- US-A- 3 682 100
- US-A- 5 009 961
- CHEMICAL ABSTRACTS, vol. 115, no. 20, 18 Novembre 1991, Columbus, Ohio, US; abstract no. 213503w, H. SAKOSHIRI 'Surface roughening of ceramics for metal coating' page 357 ; & JP-A-3 153 588 (SEIKO INSTRUMENTS AND ELECTRONICS, LTD.)

## Description

La présente invention se rapporte à un procédé et à un système de protection contre l'oxydation d'un matériau oxydable tel qu'un composé carboné afin de rendre inoxydable ce matériau à des températures élevées (de l'ordre de 1900 C) et à des basses pressions, pendant de longues durées.

Ce matériau est plus spécialement destiné à être utilisé comme protection thermique de haute performance pour la réalisation de véhicules spatiaux (navette, aéronef, avion spatial) devant résister aux échauffements importants provoqués par le frottement de l'air lors de leur rentrée à grande vitesse dans l'atmosphère.

En particulier, l'invention est destinée à la constitution de pièces telles que le nez, les ailerons ou bords d'attaque de ces véhicules spatiaux qui sont soumis à des températures variables allant de 1000 à 1600 C et à des pressions comprises entre 5.10²Pa à 10⁴Pa. Toutefois, l'invention s'applique aussi dans d'autres secteurs industriels nécessitant l'utilisation de structures légères capables de résister à des contraintes mécaniques élevées sous des températures supérieures à 1100 C.

Les matériaux oxydables auxquels s'applique l'invention sont soit des substrats massifs soit des matériaux composites constitués de fibres de renfort noyées dans une matrice oxydable telle qu'une matrice carbonée (carbone ou carbone dopé) ou une matrice en céramique du type carbure de silicium, nitrure de bore, nitrure de silicium, carbonitrure de bore. Les fibres peuvent être courtes ou longues, tissées ou bobinées, nattées ou tressées.

Elles peuvent être arrangées selon une, deux, trois, quatre directions ou plus. Elles sont en outre réalisées en un matériau réfractaire tel que le graphite, le carbone, l'alumine, le nitrure de bore, le carbure de silicium.

L'invention s'applique de façon générale à tout matériau oxydable devant résister à des hautes températures pendant de longues durées.

L'avantage des matériaux composites carbonés est qu'ils gardent leur intégrité mécanique sous haute température.

Malheureusement, ces matériaux présentent l'inconvénient de s'oxyder de manière importante dès 450 C en présence d'air, qui se traduit par la formation de gaz CO et CO₂ entraînant leur destruction. Il est donc impératif de développer pour ces matériaux une protection fiable contre l'oxydation.

Différentes méthodes ont déjà été envisagées pour protéger contre l'oxydation les matériaux carbonés.

La technique de protection anti-oxydation la plus utilisée actuellement est basée sur l'emploi d'un revêtement externe, en général à base de carbure de silicium, associé à un verre de silice ou borosilicaté destiné à cicatriser les fissures du revêtement externe ces fissures étant dues aux différences de coefficient de dilatation thermique entre ce revêtement et le matériau carboné. Voir à cet effet le document FR-A-2 611 198.

Cette solution est intrinsèquement limitée à un domaine de pressions (10²Pa à 10⁵Pa) et de températures (1000 C à 1550 C) restreint. En effet, à basse température la viscosité du verre est trop élevée pour colmater efficacement les fissures alors qu'à haute température cette viscosité peut devenir trop faible et le verre peut ne plus adhérer au revêtement. De plus, le revêtement et le verre peuvent réagir entre eux pouvant entraîner une dégradation de la protection.

Une solution améliorée décrite dans le document FR-A-2 635 773 ou FR-A-2 671 798 consiste en l'emploi d'un bicouche nitrure d'aluminium-oxyde d'aluminium sur le revêtement externe en carbure de silicium. Toutefois, ce revêtement présente dans certaines conditions d'utilisation (mission longue durée par exemple d'un avion spatial) une efficacité contre l'oxydation qui peut être insuffisante. En effet, dans certaines conditions, le revêtement multicouche peut laisser diffuser l'oxygène de l'air jusqu'au matériau carboné entraînant son oxydation. Son utilisation est donc limitée dans le temps.

Ces revêtements multicouches sont effectués en plusieurs étapes. Ainsi, le revêtement externe est formé par siliciuration du substrat carboné suivie d'un dépôt chimique en phase vapeur de carbure de silicium qui assure un début de cicatrisation des fissures du revêtement. On effectue ensuite le dépôt du verre ou du bicouche AlN/Al₂O₃ sur le carbure de silicium.

Par ailleurs, l'emploi d'un revêtement multicouche peut, dans certains cas, être trop sophistiqué.

Ainsi, il serait intéressant de disposer dans certains cas d'un matériau carboné et de façon générale oxydable protégé contre l'oxydation plus facilement réalisable et ne présentant pas les inconvénients mentionnés ci-dessus.

A cet effet, l'invention a pour objet un procédé de protection contre l'oxydation d'un matériau oxydable présentant des pores ouverts le rendant perméable aux gaz et comprenant une première surface destinée à être au contact d'un flux gazeux oxydant susceptible de l'oxyder et une seconde surface opposée à la première. Selon les caractéristiques de l'invention, ce procédé consiste à injecter grâce à un système d'injection, dont l'ouverture et la fermeture sont commandées, un gaz protecteur exempt d'oxygène, à travers ladite seconde surface, ce gaz protecteur étant susceptible de limiter l'accès de l'oxygène à l'intérieur de la porosité du matériau et de bloquer les sites actifs dudit matériau.

En particulier, ce matériau peut être utilisé dans une plus grande gamme de températures et de pressions que celle des structures à verre cicatrisant, et pendant des durées deux à trois fois supérieures à celles des structures multicouches les plus sophistiquées actuellement connues.

L'injection du gaz protecteur a pour but de limiter la cinétique d'accès de l'oxygène à l'intérieur de la porosité du matériau par dilution et entraînement de l'oxygène, afin de limiter la teneur en oxygène de la couche de gaz au contact de la surface externe du matériau. L'injection de gaz permet également de bloquer les sites actifs du matériau, c'est-à-dire les sites qui sont attaqués préférentiellement par l'oxygène (sites dits actifs jusqu'à 900°C).

Le procédé de l'invention conduit donc à un matériau léger, facile à réaliser.

La vitesse du gaz injecté va dépendre à la fois des conditions d'utilisation du matériau telles que la concentration et les flux des espèces gazeuses en présence, essentiellement l'oxygène de l'environnement et le gaz protecteur, et des caractéristiques morphologiques du matériau telles que sa perméabilité aux gaz et sa constitution.

En particulier, pour assurer une protection efficace, à la fois en surface et dans les pores du matériau, le débit (ou la vitesse) du gaz à injecter peut être supérieur à celui (ou celle) du gaz oxydant afin de s'opposer à ce dernier. Lors de la rentrée dans l'atmosphère, la vitesse d'un véhicule spatial et donc du flux oxydant varie de 25 Mach à 0,4 Mach.

De préférence, l'invention s'applique à un matériau composite comportant des fibres de renforts noyées dans une matrice. Cette matrice est réalisée en l'un des matériaux cités précédemment et de préférence est essentiellement à base de carbone ou éventuellement dopée par du carbure de silicium à une concentration de 0 à 20% en volume. La matrice peut être formée par imprégnation par voie gazeuse ou par voie liquide d'une préforme fibreuse.

Les fibres de renfort peuvent être agencées et réalisées en l'un des matériaux cités précédemment. De préférence, les fibres sont tissées et réalisées en carbone (ou graphite), pour des raisons de tenues mécanique et thermique élevées.

Par "carbone", il faut aussi comprendre le graphite dans la suite du texte.

Le gaz protecteur utilisable dans l'invention doit être exempt d'oxygène ; il peut être neutre, voire même réducteur.

Ainsi, on peut utiliser l'azote, les gaz rares (néon, argon), le chlore, l'ammoniac, etc. De préférence, on utilise un gaz inerte tel que l'azote.

Afin d'améliorer la protection du matériau contre l'oxydation, un revêtement externe perméable au gaz, formé en une céramique différente d'un verre peut être prévu sur la surface externe du matériau au contact du gaz oxydant Ce revêtement est typiquement un nitrure, un carbure, un siliciure ou un oxyde.

De préférence, le revêtement externe est en nitrure de silicium ou en alumine alpha.

L'utilisation d'un revêtement externe permet notamment de diminuer la vitesse et donc le débit du gaz protecteur injecté.

Ce revêtement externe, tout comme le matériau oxydable, doit être perméable au gaz injecté pour que ce dernier s'oppose au flux oxydant.

Le nitrure de silicium et l'alumine présentent l'avantage de posséder des propriétés mécaniques et thermiques élevées alliées à une bonne résistance à l'oxydation, pratiquement identiques à celles du carbure de silicium généralement utilisé comme revêtement externe. En particulier, ces matériaux restent intacts jusqu'à des températures de 1900 C pour Si₃N₄ où il commence à se décomposer et de 2050 C pour Al₂O₃ où elle commence à fondre.

En outre, le coefficient de dilatation thermique du nitrure de silicium est compatible avec celui du carbone.

Contrairement aux revêtements externes actuellement utilisés pour la protection contre l'oxydation, le revêtement de l'invention est destiné à être utilisé sans verre de cicatrisation.

Les différentes méthodes de fabrication du nitrure de silicium conduisent à des matériaux ayant des propriétés très différentes.

Dans les conditions sévères de rentrée dans l'atmosphère, le nitrure de silicium aura tendance à s'oxyder pouvant entraîner la formation de fissures et/ou l'amincissement de ce revêtement.

En outre, l'endommagement du revêtement externe peut résulter d'un impact avec une micrométéorite ou avec des débris spatiaux.

Les inventeurs ont donc envisagé la fabrication de ce revêtement selon une technique assurant la réparation de la couche endommagée et par conséquent la réutilisation de l'avion spatial pour une autre mission. De plus, la méthode choisie de fabrication du nitrure de silicium ou de l'alumine doit assurer un bon accrochage du revêtement externe sur les matériaux oxydables et plus spécialement carbonés.

Aussi, le revêtement externe en Si₃N₄ est obtenu avantageusement par nitruration d'une mousse de silicium déposée sur le corps perméable ou par pyrolyse d'un polymère azoté et silicié, précurseur de nitrure de silicium. Cette pyrolyse est effectuée avantageusement en présence de poudre de nitrure de silicium.

Le revêtement externe en Al₂O₃ peut également être avantageusement obtenu, soit par voie liquide à partir d'un sol d'alumine déposé sur le corps perméable et traité thermiquement (technique sol-gel) soit par projection plasma.

Toutes ces méthodes sont en outre compatibles avec le recouvrement de pièces complexes de grandes dimensions. Par ailleurs, elles assurent au revêtement une porosité et une perméabilité contrôlables et suffisantes pour permettre le passage du gaz injecté et donc son opposabilité au flux oxydant.

Afin d'améliorer l'accrochage de la couche de nitrure de silicium ou d'alumine alpha sur le corps oxydable et par exemple carboné, il est possible d'interposer, entre le revêtement externe perméable (poreux) et le corps, une couche d'accrochage inerte chimiquement vis-à-vis du corps et du revêtement externe. Cette couche est en particulier en carbure de silicium seul ou une bicouche SiC/AlN. Le SiC est formé notamment par siliciuration du matériau carboné selon les techniques bien connues de l'homme de l'art ; cette méthode conserve et accroît la perméabilité aux gaz du matériau.

L'invention a aussi pour objet un système de protection contre l'oxydation d'un matériau oxydable perméable au gaz, comportant une première surface destinée à être au contact d'un flux gazeux oxydant, susceptible d'oxyder le corps, et une seconde surface opposée à la première, caractérisé en ce qu'il comprend des moyens dont l'ouverture et la fermeture sont commandées pour injecter un gaz protecteur exempt d'oxygène à travers la seconde surface, ce gaz protecteur étant susceptible de limiter l'accès de l'oxygène à l'intérieur de la porosité du matériau et de bloquer les sites actifs dudit matériau.

D'autres caractéristiques et avantages de l'invention ressortiront mieux de la description qui va suivre, donnée à titre illustratif et non limitatif, en référence aux dessins annexés dans lesquels :
- la figure 1 représente schématiquement en coupe une pièce en matériau composite, protégée conformément à l'invention,
- la figure 2 montre de façon plus détaillée la structure composite du matériau carboné de la figure 1,
- la figure 3 est une variante de réalisation de l'invention, faisant intervenir un revêtement externe en céramique perméable au gaz.

Le procédé et le dispositif de protection contre l'oxydation de l'invention s'appliquent plus particulièrement à un matériau composite du type carbone/carbone. Aussi, la description qui suit se rapportera à ce type de matériau.

En outre, quelle que soit la fabrication de ce type de matériau, celui-ci est suffisamment perméable au gaz (poreux) pour la mise en oeuvre de l'invention.

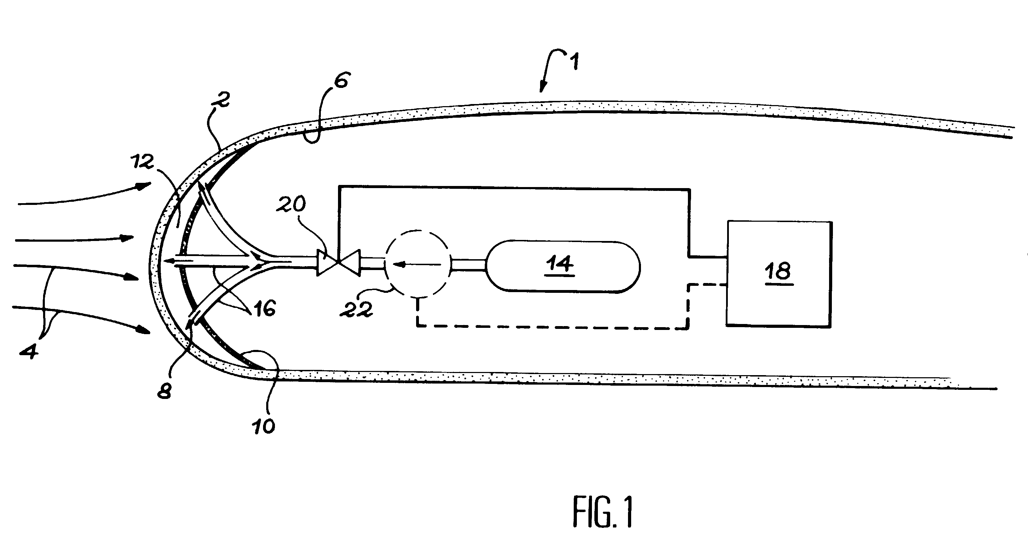

Le matériau carbone/carbone auquel s'applique l'invention est plus spécialement destiné à la réalisation du nez, des bords d'attaque et des ailerons d'un avion spatial. Aussi, sur la figure 1, on a représenté schématiquement, en coupe, une aile d'avion spatial. Sur cette figure, la référence 1 indique de façon générale la pièce en matériau composite perméable à laquelle s'applique l'invention.

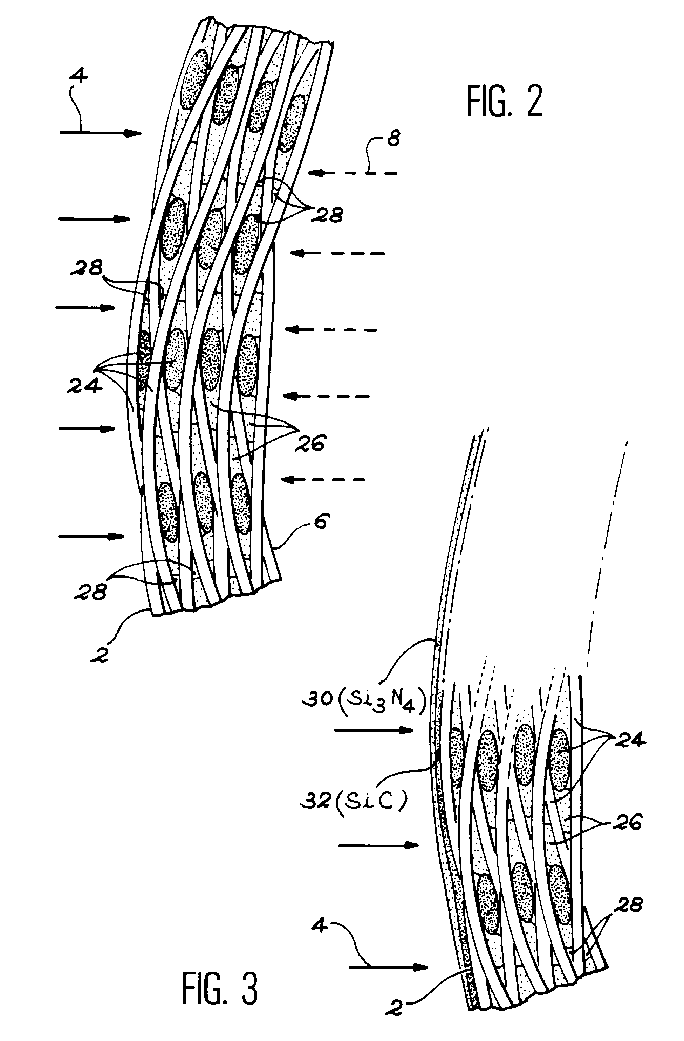

Ce matériau comporte, en référence aux figures 1 et 2, une surface externe 2 destinée à être au contact d'un flux d'air 4 oxydant et une surface interne 6, opposée à la surface externe 2. Il est perméable au gaz.

Afin d'assurer sa protection contre l'oxydation par le flux oxydant 4, on injecte un gaz inerte protecteur 8 exempt d'oxygène comme l'azote, à travers la surface interne 6 du matériau composite. Ce gaz 8 est injecté à une vitesse supérieure à celle du flux 4 permettant ainsi de s'opposer à ce flux et donc d'assurer une protection efficace du matériau.

Pour éviter la diffusion de ce gaz protecteur 8 à l'intérieur de toute la pièce en matériau composite 1, ici l'aile, une paroi étanche 10 peut être prévue en arrière de la surface 6, la paroi 10 et la surface 6 définissant ainsi une chambre d'injection 12.

Le système permettant l'injection de gaz comporte de façon schématique un réservoir 14 de gaz comprimé devant être mis en communication avec la chambre d'injection 12 via des conduites 16.

L'injection du gaz protecteur 8 est assurée uniquement lorsque la surface externe 2 est soumise au flux oxydant 4, par exemple lors de la rentrée dans l'atmosphère de l'avion spatial.

Dans ce cas, l'injection de gaz est commandée par l'un des microprocesseurs 18 présents à bord de l'avion spatial. Ce microprocesseur 18 commande en fait, l'ouverture et la fermeture d'une électrovanne 20 située en sortie du réservoir 14 et montée sur les conduites 16.

Pour favoriser l'éjection de gaz, une pompe de circulation de gaz 22 peut éventuellement être prévue entre l'électrovanne 20 et le réservoir 14, son actionnement étant aussi commandé par le microprocesseur 18.

Le matériau composite auquel s'applique l'invention est constitué, comme représenté sur la figure 2 de façon plus détaillée, de fibres de carbone ou de graphite 24 tissées selon la technique connue des matériaux composites, par exemple selon la technique 2D, 2,5D, 3D.

Ces fibres sont en fait des torons constitués de plusieurs centaines de fibrilles de carbone et constituent l'armature fibreuse du matériau composite.

Ces fibres sont noyées dans une matrice 26 de carbone résultant en particulier de la pyrolyse d'une résine polymérisée, précurseur de carbone, telle que les résines phénolformaldéhyde ou furanique ou de la pyrolyse d'un brai.

Sur la figure 2, la référence 28 indique les pores du matériau composite 1. Ces pores se trouvent en particulier entre les torons de fibres tissées.

Afin d'améliorer la protection contre l'oxydation du matériau carboné, on recouvre avantageusement, comme représenté sur la figure 3, la surface externe 2 du matériau d'un revêtement externe 30 perméable au gaz (poreux) en nitrure de silicium ou en alumine alpha. Ce revêtement a une épaisseur pouvant aller de 10µm à 1000µm.

Afin d'améliorer son accrochage sur le matériau carboné 1, une couche d'accrochage 32 en carbure de silicium peut être interposée entre le revêtement 30 et la surface 2 du matériau 1.

Cette couche 32 a une épaisseur pouvant aller de 10 à 1000µm.

Conformément à l'invention, ces couches 30 et 32 recouvrent toute la surface externe 2 du matériau composite devant être au contact du flux oxydant 4. L'emploi du revêtement 30 permet de limiter le débit du gaz protecteur injecté et donc la quantité de gaz embarquée.

Afin d'assurer la réparation du revêtement 30 en cas de fissuration ou de détérioration, celui-ci est réalisé : soit par nitruration de silicium déposé sur la surface externe du matériau ; soit par pyrolyse d'un polymère azoté et silicié précurseur de Si₃N₄ tel qu'un polyalkylsilazane de préférence en présence de poudre de nitrure de silicium (le radical alkyle pouvant avoir de 1 à 10 atomes de carbone) ; soit par traitement thermique d'un gel de boehmite (alumine gamma, hydratée) ; soit par projection plasma d'Al₂O₃.

1°) - La technique de nitruration Selon l'invention, on forme une barbotine par dispersion par ultrasons de poudre de silicium dans de l'eau. Pour avoir une stabilisation dans le temps de la suspension, cela nécessite l'utilisation d'un moyen physique de répulsion entre les grains.

Cette répulsion peut être électrostatique ou stérique. En particulier, on peut utiliser une répulsion électrostatique en contrôlant le pH de la solution. Le meilleur état de dispersion est obtenu pour un pH basique compris entre 10 et 12.

La répulsion de nature stérique est obtenue en jouant sur la concentration en poudre.

Pour une poudre de silicium Si STA de 5µm de granulométrie de chez Poudmet (France), une étude de sédimentation pour un pH de 10 à 12 et plusieurs concentrations a permis de définir une concentration optimum de 350g/l de poudre de Si pour un pH de 11,7.

Afin d'améliorer la dispersion de la poudre, un agent dispersif tel qu'un polyacrylate d'ammonium peut être utilisé. Une bonne dispersion peut être obtenue avec du Darvan C à une concentration représentant de 0,4 à 0,8% de la masse de la poudre.

Dans ces conditions, on obtient une mousse de silicium que l'on dépose de façon très homogène, comme une peinture, sur la surface externe 2 du matériau. Après séchage à l'air, on effectue une nitruration du silicium qui consiste à soumettre la mousse pendant plusieurs heures (4 à 5) à des températures proches du point de fusion du silicium (1420 C) en présence d'azote.

On obtient ainsi une couche de nitrure de silicium dont l'accrochage sur le carbone est bon. Une analyse par diffraction des rayons X indique que ce nitrure de silicium est cristallisé sous la forme x-Si₃N₄.

L'épaisseur du dépôt varie de 760 à 1000µm et sa texture est extrêmement poreuse. La porosité ouverte mesurée par porosité à l'eau est de 30%.

2Y) - Pyrolyse d'un précurseur liquide Le précurseur liquide utilisé est en particulier un polymère de monométhylsilazane dont la formulation est : (-Si(CH₃)H-NH-)ₙ avec n allant de 33 à 170 et valant typiquement 85, ce qui correspond à une masse molaire de 2000g à 10000g.

La pyrolyse du polymère permet de rompre les liaisons Si-H, Si-CH₃ et N-H pour ne laisser que les liaisons Si-N. Ainsi le polysilazane est décomposé en Si₃N₄.

Pour obtenir un revêtement plus homogène et un meilleur rendement volumique, de la poudre de Si₃N₄ est ajoutée au monométhylsilazane dans des proportions d'environ 20/80 à 80/20 et typiquement 50/50.

Afin d'améliorer les dispersions de la poudre, un défloculant (environ 1%) tel que le KD1, hythermer de chez ICI (US) est additionné au polysilazane dans du trichloroéthane.

Le mélange obtenu est ensuite étalé comme une peinture en une fine couche sur la surface externe 2 du matériau composite.

Le revêtement est alors polymérisé et pyrolysé sous azote.

La polymérisation est obtenue en chauffant lentement (de 1 à 3 heures) le matériau jusqu'à une température de 350 C qui est alors maintenue pendant plusieurs heures (5 heures typiquement).

La pyrolyse est obtenue en chauffant ensuite le matériau jusqu'à 600 C et en maintenant cette température pendant quelques heures (1 à 2 heures).

Après redescente du matériau à température ambiante, on obtient un revêtement de Si₃N₄ de 20 à 50µm d'épaisseur et son accrochage sur le matériau 1 ne pose pas de problème.

D'après l'analyse par diffraction des rayons X, le nitrure de silicium est encore cristallisé sous forme x. Sa porosité est de 10 à 30%.

La surface du dépôt est homogène et peu fissurée.

La grande facilité de mise en oeuvre du revêtement en nitrure de silicium et son bon accrochage sur les matériaux carbonés en font un excellent candidat pour la protection des matériaux composites carbone/carbone. En outre, il répond au critère de réparabilité demandé pour des pièces destinées aux avions spatiaux.

Le nitrure de silicium, bien que s'oxydant de façon active vers 1600 C, constitue une barrière efficace contre l'oxydation puisqu'il s'oxyde beaucoup moins rapidement que le matériau composite carbone/carbone.

3Y) - Traitement thermique d'un gel de boehmite Un sol de boehmite (Al₂O₃,nH₂O) est peptisé en milieu aqueux (8 à 16% en poids d'Al₂- )par de l'acide nitrique.

Quelques pourcents de liant organiques du type PVA (polyvinylalcool) et 1% de dispersant du type polymère fluorocarboné (Fluoade^{(R)}-FC430) sont ajoutés au sol.

Le dépôt de boehmite sur le corps carboné à revêtir est réalisé par trempage (dip-coating en terminologie anglosaxonne) ou par pulvérisation. On effectue ensuite un séchage et une cuisson vers 500°C.

Plusieurs couches d'Al₂O₃ ainsi obtenues peuvent être empilées jusqu'à l'obtention de l'épaisseur recherchée.

Le revêtement subit alors un traitement thermique final à 1500°C qui transforme l'Al₂O₃⁻ en Al₂O₃ alpha poreux.

Des tests ont été réalisés sur différents échantillons.

Le matériau perméable au gaz était du C/C tissé en 2D de 7mm d'épaisseur, obtenu par imprégnation de fibres avec une résine phénolformaldéhyde, pyrolysée à 1100 C puis traitée thermiquement à 2000 C. La porosité du matériau C/C était de 30% en volume.

Le revêtement de Si₃N₄ était obtenu à partir de la pyrolyse du polyméthylsilazane et de poudre de Si₃N₄ comme décrit ci-dessus.

Ces tests sont portés dans le tableau ci-après (Δ m/m)^{%} représente la perte de masse moyenne du matériau.

D'après ce tableau, on constate qu'un matériau composite C/C protégé par du Si₃N₄ déposé par voie liquide, soumis à une injection de gaz d'azote avec une différence de pression de 10⁴Pa, présente une vitesse totale d'oxydation très inférieure à celle obtenue avec un matériau protégé sans injection de gaz.

En outre, on constate qu'un matériau non protégé soumis à une injection d'azote avec une différence de pression de 10⁴Pa a une vitesse d'oxydation inférieure à celle du même matériau sans injection de gaz.

Ainsi, on a bien mis en évidence la réelle influence de la protection par injection gazeuse sur la réduction de la vitesse d'oxydation tant du matériau composite que du revêtement externe.

Pour des raisons de réduction de poids, notamment dans le cas d'un véhicule spatial, il est préférable d'associer la couche de Si₃N₄ (voire d'alumine) à l'injection de gaz.

Bien entendu, la description précédente de l'invention a été faite à titre illustratif. En particulier, des modifications portant sur la technique de fabrication du matériau composite ainsi que sur le système d'injection de gaz protecteur peuvent être envisagées.

**TABLEAU**

| | **Protection** | **Pression surface 2** | **Pression Surface 6** | **Débit (g/s.m**^{**2**}**)** | **(Δm/m) (%) en 20 min** |
|---|---|---|---|---|---|
| **Cas A:** C/C non revêtu de Si₃N₄ | **Sans injection** | 5x10³ Pa | | | **15.6** |
| **Cas B:** C/C non revêtu de Si₃N₄ | **Avec injection** N₂ | 5x10³ Pa | 25x10³ Pa | **28** | **2.3** |
| **Cas C:** C/C revêtu de Si₃N₄ | **Sans injection** | 5x10³ Pa | | | **8.1** |
| **Cas D:** C/C revêtu de Si₃N₄ | **Avec injection** N₂ | 5x10³ Pa | 25x10³ Pa | **7** | **4.2** |

## Revendications

1. Procédé de protection contre l'oxydation d'un matériau oxydable (1) présentant des pores ouverts (28) le rendant perméable aux gaz et comportant une première surface (2) destinée à être au contact d'un flux gazeux oxydant (4) susceptible de l'oxyder et une seconde surface (6) opposée à la première, caractérisé en ce qu'il consiste à injecter grâce à un système d'injection dont l'ouverture et la fermeture sont commandées, un gaz protecteur (8) exempt d'oxygène, à travers ladite seconde surface (6), ce gaz protecteur (8), étant susceptible de limiter l'accès de l'oxygène à l'intérieur de la porosité du matériau (1) et de bloquer les sites actifs dudit matériau.

2. Procédé selon la revendication 1, caractérisé en ce que le gaz protecteur (1) est injecté à une vitesse lui permettant de s'opposer au flux gazeux oxydant (4).

3. Procédé selon la revendication 1 ou 2, caractérisé en ce que le gaz protecteur est choisi parmi l'azote, les gaz rares, le chlore.

4. Procédé selon l'une quelconque des revendications 1 à 3, caractérisé en ce qu'on forme sur la première surface (2), un revêtement externe (30) perméable au gaz, en une céramique différente d'un verre, choisie parmi les nitrures, carbures, siliciures et oxydes, contribuant aussi à la protection du matériau (1) contre l'oxydation.

5. Procédé selon la revendication 4, caractérisé en ce que le revêtement externe (30) est en nitrure de silicium ou en alumine alpha.

6. Procédé selon la revendication 5, caractérisé en ce que le revêtement externe (30) est obtenu par nitruration d'une mousse de silicium déposée sur le corps perméable.

7. Procédé selon la revendication 6, caractérisé en ce que la nitruration est effectuée sous azote.

8. Procédé selon la revendication 6, caractérisé en ce que la mousse est formée en dispersant de la poudre de silicium dans une solution aqueuse à pH basique.

9. Procédé selon la revendication 8, caractérisé en ce que la solution contient un agent dispersif.

10. Procédé selon la revendication 5, caractérisé en ce que le revêtement externe (30) est obtenu par pyrolyse d'un polymère azoté et silicié déposé sur le corps perméable (1).

11. Procédé selon la revendication 10, caractérisé en ce que la pyrolyse est effectuée en présence de poudre de nitrure de silicium.

12. Procédé selon la revendication 10 ou 11, caractérisé en ce que le polymère azoté et silicié est un polyméthylsilazane.

13. Procédé selon la revendication 5, caractérisé en ce que le revêtement externe (30) est obtenu soit par voie liquide à partir d'un gel d'alumine déposé sur le corps perméable (1) puis traité thermiquement, soit par projection plasma.

14. Procédé selon la revendication 13, caractérisé en ce que le gel d'alumine est un gel de boehmite.

15. Procédé selon l'une quelconque des revendications 4 à 14, caractérisé en ce qu'on interpose entre le revêtement externe (30) et le matériau (1) perméable au gaz, une couche d'accrochage (32) de ce revêtement (30).

16. Procédé selon la revendication 15, caractérisé en ce que la couche d'accrochage (32) est du carbure de silicium perméable au gaz.

17. Procédé selon l'une quelconque des revendications 1 à 16, caractérisé en ce que le matériau perméable au gaz (1) est essentiellement en carbone ou en carbone dopé avec du carbure de silicium.

18. Procédé selon l'une quelconque des revendications 1 à 17, caractérisé en ce que le matériau perméable au gaz (1) comprend un renfort fibreux (24) noyé dans une matrice (26) essentiellement en carbone ou en carbone dopé avec du carbure de silicium.

19. Procédé selon la revendication 18, caractérisé en ce que le renfort (24) est en carbone.

20. Système de protection contre l'oxydation d'un matériau oxydable (1) perméable au gaz, comportant une première surface (2) destinée à être au contact d'un flux gazeux oxydant (4), susceptible de l'oxyder, et une seconde surface (6) opposée à la première, caractérisé en ce qu'il comprend des moyens (12, 14, 16,18,20) dont l'ouverture et la fermeture sont commandées pour injecter un gaz protecteur (8) exempt d'oxygène à travers ladite seconde surface (6), ce gaz protecteur (8) étant susceptible de limiter l'accès de l'oxygène à l'intérieur de la porosité du matériau (1) et de bloquer les sites actifs dudit matériau.

21. Système de protection selon la revendication 20, caractérisé en ce que les moyens pour injecter le gaz protecteur comprennent une chambre d'injection (12) reliée à un réservoir de gaz comprimé (14) par des conduites (16) et une électrovanne (20) montée sur les conduites (16) et commandée par des microprocesseurs (18).

22. Procédé selon la revendication 20, caractérisé en ce qu'un revêtement externe (30) en une céramique différente d'un verre, perméable au gaz, choisie parmi les nitrures, carbures, siliciures et oxydes est en outre prévu sur la première surface (2) du matériau (1).

23. Système selon la revendication 22, caractérisé en ce que le revêtement externe (30) est en nitrure de silicium ou en alumine alpha.

24. Système selon la revendication 22 ou 23, caractérisé en ce qu'une couche d'accrochage (32) est prévue entre le revêtement externe (30) et le matériau perméable (1).

25. Système selon la revendication 24, caractérisé en ce que la couche d'accrochage (32) est en carbure de silicium.

## Patentansprüche

1. Verfahren zum Schutz gegen Oxidation eines oxidierbaren Materials (1) mit offenen Poren (28), die es durchlässig für Gas machen, und einer ersten Oberfläche (2), die mit einem oxidierenden Gasstrom (4) in Kontakt steht, der in der Lage ist, sie zu oxidieren, sowie einer zweiten Oberfläche (6) gegenüber der ersten, dadurch gekennzeichnet, daß ein sauerstofffreies Schutzgas (8)mittels eines Einblassystems, dessen Öffnung und Schließung gesteuert werden, über die zweite Oberfläche (6) eingeblasen wird, wobei das Schutzgas (8) in der Lage ist, den Zugang des Sauerstoffs in den Porenraum des Materials (1) zu beschränken und die aktiven Zentren des Materials zu blockieren.

2. Verfahren nach Anspruch 1, dadurch gekennzeichnet, daß das Schutzgas (1) mit einer Geschwindigkeit eingeblasen wird, die es ihm erlaubt, dem oxidierenden Gasstrom (4) entgegenzuwirken.

3. Verfahren nach Anspruch 1 oder 2, dadurch gekennzeichnet, daß das Schutzgas Stickstoff, ein Edelgas oder Chlor ist.

4. Verfahren nach einem der Ansprüche 1 bis 3, dadurch gekennzeichnet, daß auf der ersten Oberfläche (2) ein gasdurchlässiger Überzug (30) aus einem anderen Keramikmaterial als Glas gebildet wird, das entweder aus 30 Nitriden, Karbiden, Siliziumverbindungen oder Oxiden besteht und ebenfalls zum Schutz des Materials (1) gegen Oxidation beiträgt.

5. Verfahren nach Anspruch 4, dadurch gekennzeichnet, 35daß der Überzug (30) aus Siliziumnitrid oder Alpha-Aluminiumoxid besteht.

6. Verfahren nach Anspruch 5, dadurch gekennzeichnet, daß der Überzug (30) durch Nitrieren eines Siliziumschaums gebildet wird, der auf dem durchlässigen Körper aufgebracht wird.

7. Verfahren nach Anspruch 6, dadurch gekennzeichnet, daß das Nitrieren unter Stickstoff erfolgt.

8. Verfahren nach Anspruch 6, dadurch gekennzeichnet, 10 daß der Schaum durch Verteilen von Siliziumpulver in einer basischen wässerigen Lösung gebildet wird.

9. Verfahren nach Anspruch 8, dadurch gekennzeichnet, daß die Lösung ein Dispersionsmittel enthält.

10. Verfahren nach Anspruch 5, dadurch gekennzeichnet, daß der Überzug (30) durch Pyrolyse eines stickstoff- und siliziumhaltigen Polymers gebildet wird, das auf dem durchlässigen Körper (1) aufgebracht wird.

11. Verfahren nach Anspruch 10, dadurch gekennzeichnet, daß die Pyrolyse unter Verwendung von Siliziumnitridpulver durchgeführt wird.

12. Verfahren nach Anspruch 10 oder 11, dadurch gekennzeichnet, daß das stickstoff- und siliziumhaltige Polymer ein Polymethylsilasan ist.

13. Verfahren nach Anspruch 5, dadurch gekennzeichnet, daß der Überzug (30) entweder auf flüssigem Weg mittels eines Aluminiumoxids, das auf dem durchlässigen Körper (1) aufgebracht und anschließend wärmebehandelt wird, oder mittels Plasmaspritzens gebildet wird.

14. Verfahren nach Anspruch 13, dadurch gekennzeichnet, daß das Aluminiumoxidgel ein Boehmitgel ist.

15. Verfahren nach einem der Ansprüche 4 bis 14, dadurch gekennzeichnet, daß zwischen dem Überzug (30) und dem gasdurchlässigen Material (1) eine Haftschicht (32) des Überzugs (30) eingefügt wird.

16. Verfahren nach Anspruch 15, dadurch gekennzeichnet, daß die Haftschicht (32) aus gasdurchlässigem Siliziumkarbid besteht.

17. Verfahren nach einem der Ansprüche 1 bis 16, dadurch gekennzeichnet, daß das gasdurchlässige Material (1) im wesentlichen aus Kohlenstoff oder mit Siliziumkarbid dotiertem Kohlenstoff ist.

18. Verfahren nach einem der Ansprüche 1 bis 17, dadurch gekennzeichnet, daß das gasdurchlässige Material (1) eine faserartige Verstärkung (24) in einer Matrix (26) umfaßt, die im wesentlichen aus Kohlenstoff oder mit Siliziumkarbid dotiertem Kohlenstoff besteht.

19. Verfahren nach Anspruch 18, dadurch gekennzeichnet, daß die Verstärkung (24) aus Kohlenstoff ist.

20. Ein System zum Schutz gegen Oxidation eines oxidierbaren, gasdurchlässigen Materials (1) mit einer ersten Oberfläche (2), die mit einem oxidierenden Gasstrom (4) in Kontakt steht, der in der Lage ist, sie zu oxidieren, sowie einer zweiten Oberfläche (6) gegenüber der ersten, dadurch gekennzeichnet, daß es Mittel (12, 14, 16, 18, 20) umfaßt, deren Öffnung und Schließung gesteuert werden, um ein sauerstofffreies Schutzgas (8) über die zweite Oberfläche (6) einzublasen, wobei das Schutzgas (8) in der Lage ist, den Zugang des Sauerstoffs in den Porenraum des Materials (1) zu beschränken und die aktiven Zentren des Materials zu blockieren.

21. Schutzsystem nach Anspruch 20, dadurch gekennzeichnet, daß die Mittel zum Einblasen des Schutzgases eine Einblaskammer (12) umfassen, die über Leitungen (16) und ein auf den Leitungen (16) montiertes und von Mikroprozessoren (18) gesteuertes Elektroventil (20) mit einem Druckgasbehälter (14) verbunden ist.

22. Verfahren nach Anspruch 20, dadurch gekennzeichnet,daß der gasdurchlässige Überzug (30), der aus einem anderen Keramikmaterial als Glas gebildet wird, das aus Nitriden, Karbiden, Siliziumverbindungen oder Oxiden besteht, auch auf der ersten Oberfläche (2) des Materials (1) vorgesehen ist.

23. System nach Anspruch 22, dadurch gekennzeichnet, daß der Überzug (30) aus Siliziumnitrid oder Alpha-Aluminiumoxid besteht.

24. System nach Anspruch 22 oder 23, dadurch gekennzeichnet, daß eine Haftschicht (32) zwischen dem Überzug (30) und dem durchlässigen Material (1) vorgesehen ist.

25. System nach Anspruch 24, dadurch gekennzeichnet, daß die Haftschicht (32) aus Siliziumkarbid ist.

## Claims

1. Process for the protection against oxidation of an oxidizable material (1) having open pores (28) making it permeable to gases and having a first surface (2) intended to come into contact with an oxidizing gaseous flow (4) able to oxidize it and a second surface (6) opposite to the first, characterized in that it consists of injecting by means of an injection system, whose opening and closing are controlled, an oxygen-free protective gas (8) through said second surface (6), said protective gas being able to limit the access of the oxygen to the interior of the pores of the material (1) and block the active sites of said material.

2. Process according to claim 1, characterized in that the protective gas (1) is injected at a speed enabling it to oppose the oxidizing gaseous flow (4).

3. Process according to claim 1 or 2, characterized in that the protective gas is chosen from among nitrogen, rare gases and chlorine.

4. Process according to any one of the claims 1 to 3, characterized in that on the first surface (2) is formed a gas-permeable outer coating (30) made from a ceramic material differing from a glass, chosen from among nitrides, carbides, silicides and oxides, and which also contributes to the oxygen protection of the material (1).

5. Process according to claim 4, characterized in that the outer coating (30) is of silicon nitride or alpha alumina.

6. Process according to claim 5, characterized in that the outer coating (30) is obtained by nitriding a silicon foam deposited on the permeable body.

7. Process according to claim 6, characterized in that nitriding is carried out under nitrogen.

8. Process according to claim 6, characterized in that the foam is formed by dispersing silicon powder in an aqueous solution at a basic pH.

9. Process according to claim 8, characterized in that the solution contains a dispersing agent.

10. Process according to claim 5, characterized in that the outer coating (30) is obtained by the pyrolysis of a nitrogen and silicon-containing polymer deposited on the permeable body (1).

11. Process according to claim 10, characterized in that pyrolysis is performed in the presence of silicon nitride powder.

12. Process according to claim 10 or 11, characterized in that the nitrogen and silicon-containing polymer is a polymethyl silazane.

13. Process according to claim 5, characterized in that the outer coating (30) is either obtained by the liquid route from an alumina gel deposited on the permeable body (1) and then heat treated, or by plasma spraying.

14. Process according to claim 13, characterized in that the alumina gel is a boehmite gel.

15. Process according to any one of the claims 4 to 14, characterized in that between the outer coating (30) and the gas-permeable material (1) is placed an attachment layer (32) for said coating (30).

16. Process according to claim 15, characterized in that the attachment layer (32) is of gas-permeable silicon carbide.

17. Process according to any one of the claims 1 to 16, characterized in that the gas-permeable material (1) is essentially made from carbon or carbon doped with silicon carbide.

18. Process according to any one of the claims 1 to 17, characterized in that the gas-permeable material (1) comprises a fibrous reinforcement (24) embedded in a matrix (26) essentially made from carbon or carbon doped with silicon carbide.

19. Process according to claim 18, characterized in that the reinforcement (24) is made from carbon.

20. Protection system against the oxidation of a gas-permeable oxidizable material (1) having a first surface (2) to come into contact with an oxidizing gaseous flow (4) liable to oxidize it and a second surface (6) opposite to the first, characterized in that it comprises means (12, 14, 16, 18, 20), whose opening and closing are controlled, for injecting an oxygen-free protective gas (8) through said second surface (6), said protective gas (8) being able to limit the access of the oxygen to the interior of the pores of the material (1) and block the active sites of said material.

21. Protection system according to claim 20, characterized in that the means for injecting the protective gas incorporate an injection chamber (12) connected to a compressed gas tank (14) by ducts (16) and an electrovalve (20) mounted on the ducts (16) and controlled by microprocessors (18).

22. System according to claim 20, characterized in that an outer coating (30) of a ceramic material different from glass, chosen from among nitrides, carbides, silicides and oxides, and permeable to gas is provided on the first surface (2) of the material (1).

23. System according to claim 22, characterized in that the outer coating (30) is of silicon nitride or alpha alumina.

24. System according to claim 22 or 23, characterized in that an attachment layer (32) is provided between the outer coating (30) and the permeable material (1).

25. System according to claim 24, characterized in that the attachment layer (32) is of silicon carbide.
